# EUROPÄISCHE PATENTSCHRIFT

(11) **EP 3 170 022 B1**
(45) Veröffentlichungstag und Bekanntmachung des Hinweises auf die Patenterteilung: **26.12.2018**
(21) Anmeldenummer: 15738100.5
(22) Anmeldetag: 16.07.2015
(51) Int. Cl.: G01S 15/93, G01S 7/527, G01S 15/10, G01S 15/32, G01S 7/52

(54) **RAUSCHROBUSTE OBJEKTORTUNG MIT ULTRASCHALL**
NOISE-ROBUST OBJECT LOCATION WITH ULTRASOUND
LOCALISATION D'OBJET, ROBUSTE AU BRUIT, AVEC DES ULTRASONS

(30) Priorität: 18.07.2014 DE 102014110187
(43) Veröffentlichungstag der Anmeldung: 24.05.2017
(73) Patentinhaber: Valeo Schalter und Sensoren GmbH, 74321 Bietigheim-Bissingen (DE); Fraunhofer-Gesellschaft, 80686 München (DE)
(72) Erfinder: HABERLAND, Udo, 74321 Bietigheim-Bissingen (DE); HALLEK, Michael, 74321 Bietigheim-Bissingen (DE); LILL, Anton, 74321 Bietigheim-Bissingen (DE); GRÜDL, Dietmar, 74321 Bietigheim-Bissingen (DE); GRINBERG, Michael, 76131 Karlsruhe (DE); WILLERSINN, Dieter, 76139 Karlsruhe (DE); KROSCHEL, Kristian, 76337 Waldbronn (DE)
(74) Vertreter: Hofstetter, Schurack & Partner
(86) Internationale Anmeldenummer: PCT/EP2015/066249
(87) Internationale Veröffentlichungsnummer: WO 2016/008972

(56) Entgegenhaltungen:
- EP-A2- 1 355 509
- EP-A2- 2 339 365
- DE-A1-102011 102 202
- DE-A1-102011 109 915
- US-B1- 6 699 189

## Beschreibung

Die Erfindung betrifft ein Verfahren zum Betreiben einer Ultraschallmessvorrichtung, um ein Objekt in einer Umgebung der Ultraschallmessumgebung zu detektieren und insbesondere den Abstand zu diesem Objekt zu messen. Zu der Erfindung gehören auch eine Ultraschallmessvorrichtung, die sich gemäß dem Verfahren betreiben lässt, sowie ein Fahrzeug, insbesondere ein Kraftfahrzeug, ein mobiler Roboter oder ein mobiles autonomes Fahrzeug, beispielsweise ein automatisch fahrendes Straßenfahrzeug, mit der Ultraschallmessvorrichtung.

In einem Kraftfahrzeug kann eine Ultraschallmessvorrichtung beispielsweise als Bestandteil eines Parkassistenzsystems bereitgestellt sein. Ein solches Ultraschallmesssystem ist beispielsweise aus der DE 10 2011 075 484 A1 bekannt. Das darin offenbarte Ultraschallmesssystem ist dazu ausgelegt, ein Sendesignal zu modulieren und dann aus einem empfangenen Echoimpuls mittels eines Korrelationsfilters ein Korrelationssignal zu erzeugen, das zum Erkennen eines Abstands und/oder einer Relativgeschwindigkeit eines fahrzeugexternen Objekts genutzt wird. Das Korrelationsfilter kann ein digitales Optimalfilter sein, ein sogenanntes Matched-Filter. Um eine Übertragungseigenschaft eines Ultraschall-Transceivers zu berücksichtigen, wird das beschriebene Sendesignal in der Weise erzeugt, dass sich die Signatur des Ultraschallpulses von der des Ausschwingsignals des Ultraschall-Transceivers unterscheidet.

Bei der Ultraschallmessung ist eine Maximierung des Signal-zu-Rauschverhältnisses erwünscht, um auch in einem verrauschten Empfangssignal das Echosignal detektieren zu können. Um hierbei eine genaue Ortung zu erzielen, ist man auch an einer Minimierung der Nebenmaxima im Korrelationssignal interessiert. Allgemein ist es sehr aufwendig, ein passendes Sendesignal zu erzeugen, um diesen beiden Qualitätskriterien gerecht zu werden. Hierbei gibt es keine Regel für ein geschlossenes Verfahren, das die Signale an ein gegebenes System anpassen könnte. Vielmehr sind aufwendige numerische Optimierungsverfahren erforderlich, die oftmals auf dem Ansatz von Versuch und Irrtum basieren.

Im Zusammenhang mit der Anpassung an ein gegebenes System ist aus der EP 2 339 365 A2 ein Verfahren zur Kompensation von Wandler-induzierten Merkmalsstreuungen bekannt, mittels welchem ein Ultraschall-Wandler oder Mikrowellen-Transceiver kalibriert werden kann.

In dem Dokument EP 2 339 365 A2 sind ein Verfahren und eine Vorrichtung zur Kompensation einer Übertragungscharakteristik eines Transceivers für Ultraschallsignale bekannt. Das Absenden eines mit der inversen der Übertragungscharakteristik des Transceivers gefilterten oder gefalteten Sendepulses nimmt die Verzerrungen bzw. Fehler vorweg, die sich durch das Senden bzw. Empfangen durch den Transceiver ergeben. Dieses Verfahren wird auch als Vorverzerrung bezeichnet. Alternativ dazu kann vorgesehen sein, den Empfangspuls mit der inversen der Übertragungscharakteristik zu filtern.

Aus dem Dokument DE 10 2011 102 202 A1 ist eine Umfelderfassungsvorrichtung in einem Kraftfahrzeug bekannt, welche mittels Ultraschall ein Objekt in einer Umgebung des Kraftfahrzeugs erfassen kann. Die Detektion eines Objekts erfolgt mittels eines Korrelationsempfangs, wobei als Korrelationskern das Sendesignal selbst verwendet wird. Das Sendesignal kann auf der Grundlage eines Gold-Codes oder Barker-Codes oder Pseudozufallszahlen basieren, um einen Korrelationsabstand zwischen zwei Sendesignalen zu maximieren.

Der Erfindung liegt die Aufgabe zugrunde, bei einer Ultraschallmessvorrichtung in einem Korrelationssignal zuverlässig ein Objekt-Echo erkennen zu können.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Das erfindungsgemäße Verfahren dient zum Betreiben einer Ultraschallmessvorrichtung und geht von der folgenden, an sich aus dem Stand der Technik bekannten Funktionsweise einer Ultraschallmessvorrichtung aus. Aus einer digitalen Sendesequenz, also z.B. einem binären Codewort aus einer Folge von Nullen und Einsen, wird durch einen Sendezweig ein, insbesondere analoges, Sendesignal und aus dem Sendesignal durch eine Sendeeinheit, also einen Ultraschall-Transducer, ein Ultraschallsignal erzeugt. Das Ultraschallsignal wird in eine Umgebung der Ultraschallmessvorrichtung abgestrahlt, wo es auf ein Objekt treffen kann, beispielsweise ein Fremdfahrzeug. Durch Reflexion entsteht dann ein Objektecho, das wieder auf die Ultraschallmessvorrichtung treffen kann. In Abhängigkeit von dem Objekt-Echo des Ultraschallsignals wird durch eine Empfangseinheit, die beispielsweise entweder denselben Ultraschall-Transducer oder einen anderen Ultraschall-Transducer sowie einen nachgeschalteten Empfangszweig umfassen kann, ein Empfangssignal erzeugt, also beispielsweise ein digitales Signal. Aus dem Empfangssignal wird durch ein Korrelationsfilter ein Korrelationssignal erzeugt, indem das Empfangssignal mit einem Korrelationskern, also einem weiteren Signal, korreliert wird. Das sich durch die Korrelation ergebende Korrelationssignal wird dann einer Detektoreinheit zum Detektieren des Objekts bereitgestellt. Die Detektoreinheit kann in an sich bekannter Weise ausgestaltet sein.

Um nun in dem Korrelationssignal ein besonders gutes Signal-zu-Rauschverhältnis zu erzeugen, das heißt den Signalanteil des Objekt-Echos in Bezug auf ein möglicherweise enthaltenes Rauschsignal zu vergrößern, wird erfindungsgemäß durch eine Verzerrungseinrichtung dafür gesorgt, dass eine Übertragungscharakteristik der Sendeeinrichtung und/oder der Empfangseinrichtung in dem Korrelationssignal zumindest teilweise kompensiert ist. Um die Kompensation zu erreichen, wird erfindungsgemäß durch die Verzerrungseinrichtung der Korrelationskern mit einer Signalcharakteristik bereitgestellt, durch welche die Kompensation im Korrelationssignal bewirkt ist.

Durch die Erfindung ergibt sich der Vorteil, dass beim Korrelieren des Korrelationskerns mit dem Empfangssignal verhindert ist, dass im Korrelationssignal ein Korrelationsmaximum aufgrund des Einflusses der Übertragungscharakteristik verringert wird. Mit anderen Worten werden eine Verschlechterung des Signal-zu-Rauschverhältnisses aufgrund der Übertragungscharakteristik und eine hierdurch bewirkte Dekorrelation zwischen Sendesignal und Korrelationskern verringert. Durch die Verzerrungseinrichtung kann somit das Korrelationsfilter das Verhalten eines Optimalfilters (Matched-Filter) aufweisen.

Mit Übertragungscharakteristik ist hierbei in der üblichen Weise das Übertragungsverhalten gemeint, also die Übertragungsfunktion oder der Frequenzgang oder die Impulsantwort. Die genannte Übertragungscharakteristik kann dabei entweder nur für die Sendeeinheit oder die Empfangseinheit oder die Kombination aus der Übertragungscharakteristik der Sendeeinheit und derjenigen der Empfangseinheit umfassen. Durch die zumindest teilweise Kompensation wird, insbesondere abhängig zumindest von der Art und Länge der verwendeten Codierung, bevorzugt die Übertragungscharakteristik in dem Korrelationssignal zu mindestens 60 Prozent, insbesondere mindestens 80 Prozent, insbesondere vollständig kompensiert oder gedämpft. Mit anderen Worten wird insbesondere eine Veränderung der Signalenergie des Korrelationssignals, die durch die Übertragungscharakteristik verursacht wird, um mindestens 60 Prozent, insbesondere 80 Prozent, verringert, bevorzugt zu Null gesenkt. Für eine Quantisierung des Kompensationseffekts kann auf Simulationen zurückgegriffen werden.

Das erfindungsgemäße Verfahren weist mehrere Weiterbildungen auf, die sich jeweils dadurch ergeben, wie die Verzerrungseinrichtung konkret bereitgestellt wird.

Eine Ausführungsform sieht vor, dass in dem Sendezweig ein Vorverzerrungsfilter mit einer Filtercharakteristik bereitgestellt wird, durch welche im Empfangssignal die Übertragungscharakteristik zumindest teilweise kompensiert ist. Im Sendezweig ist also eine Vorverzerrung enthalten, die die Signalübertragungsstrecke berücksichtigt. Die Vorverzerrung kann beispielsweise bei einer Modulation des Sendesignals enthalten sein. Diese Vorverzerrung des Sendesignals bewirkt, dass die Signalübertragungsstrecke kompensiert werden kann. Dies führt in der beschriebenen Weise zur Vergrößerung des Signal-zu-Rauschverhältnisses. Besonders bevorzugt entspricht die Filtercharakteristik des Vorverzerrungsfilters der inversen Übertragungscharakteristik. Dann kann durch die Filtercharakteristik die Übertragungscharakteristik vollständig kompensiert werden.

Bei einer anderen Weiterbildung ist vorgesehen, dass die Verzerrungseinrichtung den Korrelationskern verzerrt. Diese Ausführungsform sieht vor, dass der Korrelationskern aus dem Sendesignal auf der Grundlage eines Filters gebildet wird, das die Übertragungscharakteristik zumindest teilweise nachbildet. Bevorzugt entspricht die Übertragungsfunktion des Filters der Übertragungscharakteristik. Im Unterschied zum Vorverzerrungsfilter im Sendezweig ergibt sich bei einem Filter zum Bilden des Korrelationskerns der Vorteil, dass auch Nullstellen in der Übertragungscharakteristik kompensiert werden können.

Falls die Übertragungscharakteristik im Voraus, also vor dem Betrieb, bekannt ist, kann auch vorgesehen sein, entsprechend vorverzerrte digitale Sequenzen abzuspeichern, also eine Sendesequenz oder einen Korrelationskern. Hierdurch ergibt sich eine vorteilhafte Weiterbildung des Verfahrens, bei welcher der Korrelationskern aus einer dauerhaft in der Ultraschallmessvorrichtung gespeicherten digitalen Korrelationssequenz gebildet wird, wobei die Korrelationssequenz von der Sendesequenz verschieden ist und ein Unterschied zwischen der Korrelationssequenz und der Sendefrequenz der Übertragungscharakteristik entspricht. Mit anderen Worten wird also im Unterschied zu einem Optimalfilter, wie es aus dem Stand der Technik bekannt ist, dem Korrelationskern nicht die Sendesequenz, sondern eine aus der Sendesequenz durch Filtern mit der Übertragungscharakteristik gebildete Korrelationssequenz zugrundegelegt.

Das Speichern einer passenden Korrelationssequenz im Voraus führt zu einer besonders aufwandsarm und kostengünstig herstellbaren Ultraschallmessvorrichtung.

Allerdings kann es bei einer Ultraschallmessvorrichtung vorkommen, dass sich die Übertragungscharakteristik im Betrieb der Ultraschallmessvorrichtung verändert. Eine in diesem Zusammenhang vorgesehene Weiterbildung des Verfahrens sieht vor, dass durch die Verzerrungseinrichtung eine Schätzung der Übertragungscharakteristik im Betrieb der Ultraschallmessvorrichtung ermittelt wird. Die Verzerrungseinrichtung ist dann dazu ausgelegt, die beschriebene Signalcharakteristik des Sendesignals und/oder Empfangssignals und/oder Korrelationskerns in Abhängigkeit von der Schätzung der Übertragungscharakteristik einzustellen.

Die Schätzung wird gemäß einer Weiterbildung durch Erfassen eines Werts eines Betriebsparameters der Ultraschallmessvorrichtung ermittelt. Ein Betriebsparameter ist im Zusammenhang mit der Erfindung eine physikalische Größe, die sich während des Betriebs der Ultraschallmessvorrichtung aufgrund eines Umwelteinflusses ändern kann. Beispielsweise kann als Wert eines Betriebsparameters ein Temperaturwert einer Temperatur der Ultraschallmessvorrichtung, ein Luftfeuchtigkeitswert einer die Ultraschallmessvorrichtung umgebenden Umgebungsluft, eine Impulsantwort eines Schallwandlers oder Transducers, insbesondere eines Piezoelements, und/oder eine Ausschwingdauer des Transducers erfasst werden. In Abhängigkeit von dem erfassten Wert kann dann die Schätzung ermittelt werden. Dies kann beispielsweise durch Auswählen einer Schätzung aus einer Mehrzahl von vorbereiteten, in einem Speicher gespeicherten Schätzungen erfolgen. Zusätzlich oder alternativ dazu kann die Schätzung auf der Grundlage eines Modells berechnet werden, wobei das Modell den ermittelten Wert als Modellparameter aufweist.

Eine genauere Schätzung kann erhalten werden, wenn das aktuelle Sendesignal und das zugehörige Empfangssignal zugrundegelegt werden. Beispielsweise kann aus einem Spektrum des Sendesignals und einem Spektrum des zugehörigen Empfangssignals durch eine Division die Übertragungscharakteristik als Spektrum berechnet werden. Dann kann diese Schätzung der Übertragungscharakteristik bei zukünftigen Korrelationen genutzt werden. Die Schätzung kann hierbei eine Momentanwertschätzung oder auch durch Verwendung einer zeitlichen Mittelung eine Langzeitschätzung sein.

Indem der Einfluss der Übertragungscharakteristik auf das Korrelationssignal teilweise oder vollständig kompensiert wird, kann mittels des erfindungsgemäßen Verfahrens auch eine Ortungsgenauigkeit der Ultraschallmessvorrichtung verbessert werden. Hierzu sieht eine Ausführungsform des Verfahrens vor, dass die Sendesequenz eine Bitfolge von wenigstens drei aufeinanderfolgenden, alternierenden Bits umfasst, also die Folge 101 oder 010, wobei diese Bits in einer bestimmten Geschwindigkeit ausgesendet werden. Die Sendedauer eines einzelnen Bits wird als Chip oder Chipdauer bezeichnet. Bei der beschriebenen Ausführungsform beträgt eine Chipdauer beim Aussenden jedes Bits weniger als 100 Mikrosekunden, insbesondere weniger als 70 Mikrosekunden, bevorzugt weniger als 60 Mikrosekunden. Die Sendesequenz kann also eine sehr komplexe Bitfolge umfassen, ohne hierbei zu lang zu werden. Im Stand der Technik sind derart schnell alternierende Ultraschallsignale nicht erzeugbar, da die unkompensierte Übertragungscharakteristik das Korrelationsergebnis zu sehr verschleifen, d.h. das Korrelationsmaximum zu stark dämpfen würde.

Besonders bevorzugt ist hierbei, dass die Sendesequenz einen Barker-Code oder ein Codewort aus einem Gold-Code umfasst. Dann kann in dem Korrelationssignal das zugehörige Objekt-Echo zuverlässig von anderen Objekt-Echos unterschieden werden. Andere Objekt-Echos können beispielsweise von Ultraschallmesssystemen anderer Fahrzeuge verursacht werden. Geeignete Barker-Codes und Gold-Codes sind im Stand der Technik verfügbar.

In diesem Zusammenhang kann aber auch vorgesehen sein, dass die Sendeeinheit und eine weitere Sendeeinheit der Ultraschallmessvorrichtung selbst in einem gemeinsamen Zeitintervall ein jeweiliges Ultraschallsignal aus unterschiedlichen Sendesignalen erzeugen. Diese unterschiedlichen Sendesignale können durch unterschiedliche Sendesequenzen gebildet sein, die bevorzugt zueinander orthogonal sind. Beispielsweise kann jeweils ein anderes Codewort aus dem beschriebenen Gold-Code zugrundegelegt sein. Dann kann das Empfangssignal mit dem Korrelationskern und einem weiteren Korrelationskern korreliert werden, wobei jeder Korrelationskern zu einer der Sendesequenzen korrespondiert. Hierdurch kann das Ultraschallsignal jeder Sendeeinheit zuverlässig von den anderen Objekt-Echos unterschieden werden. Im Stand der Technik müssen Sendeeinheiten eines Ultraschallmesssystems in der Regel zeitversetzt senden.

Die Verzerrungseinrichtung kann dazu ausgelegt sein, die Signalcharakteristik des Sendesignals oder des Korrelationskerns im Basisband auf die Übertragungscharakteristik abzustimmen. Unter Basisband ist hierbei die im Stand der Technik gängige Bezeichnung zu verstehen, d.h. das Frequenzband der Frequenzen des Nutzsignals ohne ein Trägersignal. Eine andere Ausführungsform sieht vor, dass das Sendesignal aus der Sendesequenz durch Modulieren einer Trägerfrequenz erzeugt wird und das Korrelationsfilter die Korrelation in einem Frequenzbereich der Trägerfrequenz durchführt. Dann kann entsprechend auch die Signalcharakteristik im Frequenzbereich der Trägerfrequenz eingestellt werden. Hierdurch ergibt sich der Vorteil, dass die Übertragungscharakteristik genauer nachgebildet werden kann, als es nach einem Down-Sampling für das Basisband möglich wäre.

Wie bereits ausgeführt, gehört zu der Erfindung auch eine Ultraschallmessvorrichtung. Die erfindungsgemäße Ultraschallmessvorrichtung ist dazu ausgelegt, eine Ausführungsform des erfindungsgemäßen Verfahrens durchzuführen. Hierzu weist sie einen Speicher auf, der die digitale Sendesequenz speichert, einen Sendezweig zum Erzeugen eines Sendesignals aus der Sendesequenz, das heißt in Abhängigkeit der Sendesequenz, eine Sendeeinheit zum Umwandeln des Sendesignals in das Ultraschallsignal, eine Empfangseinheit zum Erzeugen des Empfangssignals in Abhängigkeit von dem Objekt-Echo, einen Korrelationsfilter zum Korrelieren des Empfangssignals mit einem Korrelationskern und eine Detektoreinheit zum Detektieren des Objekts. Erfindungsgemäß zeichnet sich die Ultraschallmessvorrichtung durch eine Verzerrungseinrichtung aus, die dazu ausgelegt ist, bei dem Sendesignal und/oder dem Empfangssignal und/oder dem Korrelationskern jeweils eine Signalcharakteristik einzustellen, die eine Übertragungscharakteristik der Sendeeinrichtung und/oder der Empfangseinrichtung in dem Korrelationssignal zumindest teilweise, bevorzugt zu mindestens 60 Prozent, insbesondere zu mindestens 80 Prozent, bevorzugt vollständig, kompensiert. Die Verzerrungseinrichtung kann beispielsweise auf Grundlage eines ASICs (ASIC - Application Specific Integrated Circuit) realisiert werden.

Die erfindungsgemäße Ultraschallmessvorrichtung ist insbesondere als Parkassistenzsystem für ein Kraftfahrzeug ausgestaltet.

Wie bereits ausgeführt, ist es durch das Verfahren möglich, gleichzeitig mehrere Ultraschall-Transducer zu betreiben. Entsprechend sieht eine Weiterbildung der Ultraschallmessvorrichtung vor, dass mindestens eine zusätzliche Sendeeinheit mit vorgeschaltetem Sendezweig bereitgestellt ist und für alle Sendeeinheiten unterschiedliche Sendesequenzen in dem Speicher gespeichert sind. Die Sendesequenzen sind dabei bevorzugt zueinander orthogonal, das heißt sie können beispielsweise durch einen Gold-Code gebildet sein. Die Ultraschallmessvorrichtung ist dazu ausgelegt, mit den Sendeeinheiten gleichzeitig ein jeweiliges Ultraschallsignal auf Grundlage der jeweiligen Sendesequenz zu erzeugen. Indem nun mittels der Verzerrungseinrichtung ein Korrelationssignal für das Echo der jeweiligen Sendesequenz besonders gut, das heißt mit einem besonders großen Signal-zu-Rauschverhältnis, wiedererkannt werden kann, stellt ein gleichzeitiges Aussenden mehrfacher Ultraschallsignale kein Problem dar. Dafür können Messzyklen entsprechend kurz ausgestaltet sein, sodass eine genauere Ortung des Objekts möglich ist.

Ein weiterer Vorteil ergibt sich, wenn die Detektoreinheit dazu ausgelegt ist, beim Detektieren des Objekts einen Objektabstand von weniger als 40 Zentimeter, insbesondere weniger als 35 Zentimeter, von einer der Sendeeinheiten und/oder der Empfangseinheit zu überprüfen. Herkömmliche Detektoreinheiten unterschreiten diesen Mindestabstand nicht, beispielsweise weil die verwendete Codelänge zu groß ist.

Zu der Erfindung gehört schließlich auch ein Fahrzeug mit einer Ausführungsform der erfindungsgemäßen Ultraschallmessvorrichtung. Das Fahrzeug ist bevorzugt als Kraftwagen, insbesondere als Personenkraftwagen, ausgestaltet. Es kann aber auch ein mobiler Roboter oder ein autonom fahrendes Fahrzeug sein.

Im Folgenden ist ein Ausführungsbeispiel der Erfindung beschrieben. Dabei zeigen:
- Fig. 1: eine schematische Darstellung einer Ausführungsform des erfindungsgemäßen Kraftfahrzeugs,
- Fig. 2: eine schematische Darstellung eines Signalflussgraphen einer Ausführungsform der erfindungsgemäßen Ultraschallmessvorrichtung, wie sie in dem Kraftfahrzeug von Fig. 1 bereitgestellt sein kann,
- Fig. 3: eine Detailansicht eines Sendezweigs der Ultraschallmessvorrichtung von Fig. 2,
- Fig. 4: eine Detailansicht eines Empfangszweigs der Ultraschallmessvorrichtung von Fig. 2,
- Fig. 5: eine Signalverarbeitungseinrichtung des Empfangszweigs von Fig. 4,
- Fig. 6: ein Korrelationsfilter der Signalverarbeitungseinheit von Fig. 5,
- Fig. 7: eine andere Ausführungsform des Korrelationsfilters der Signalverarbeitungseinrichtung von Fig. 5,
- Fig. 8: ein Diagramm mit einem idealen Korrelationssignal,
- Fig. 9: ein Diagramm mit einem Korrelationssignal, das durch eine Übertragungscharakteristik beeinträchtigt ist,
- Fig. 10: ein Korrelationssignal, bei welchem die Übertragungscharakteristik kompensiert ist,
- Fig. 11: Spektren von Korrelationskernen, und
- Fig. 12: Spektren der Korrelationskerne, nachdem ihre Signalcharakteristik durch die Verzerrungseinrichtung eingestellt worden ist.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

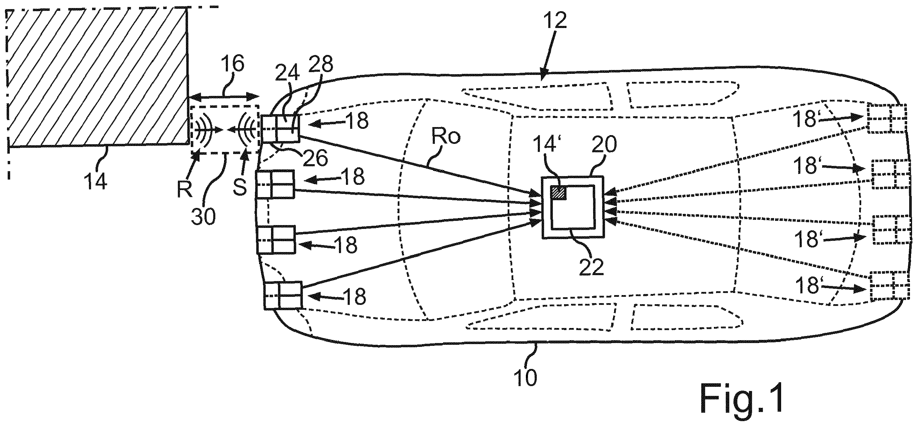

In Fig. 1 ist ein Kraftfahrzeug 10 gezeigt, bei dem es sich beispielsweise um einen Kraftwagen, insbesondere einen Personenkraftwagen, handeln kann. Das Kraftfahrzeug 10 weist eine Ultraschallmessvorrichtung 12 auf, die beispielsweise ein Parkassistenzsystem darstellen kann. Das Kraftfahrzeug 10 kann in dem Beispiel ein Einparkmanöver durchführen und sich hierbei relativ zu einem fahrzeugexternen Objekt 14, beispielsweise einem anderen parkenden Fahrzeug, bewegen. Durch die Ultraschallmessvorrichtung 12 wird hierbei beispielsweise ein Abstand 16 zwischen dem Kraftfahrzeug 10 und dem Objekt 14 wiederholt ermittelt und beispielsweise in ein Fahrerassistenzsystem zur weiteren Verwendung, z.B. zwecks Mitteilung an den (nicht dargestellten) Fahrer des Kraftfahrzeugs eingespeist. Ein weiterer Zweck des Fahrerassistenzsystems kann die Übernahme der Längs- und / oder Querführung des Fahrzeugs zur Entlastung des Fahrers oder zur vollen Automatisierung der Fahraufgabe sein.

Zum Ermitteln des Abstands 16 oder allgemein zum Detektieren des Objekts 14 kann die Ultraschallmessvorrichtung 12 Ultraschallsensoren 18 und eine mit den Ultraschallsensoren 18 gekoppelte Detektoreinheit 20 aufweisen.

Die Detektoreinheit 20 kann von den Ultraschallsensoren 18 jeweils ein Korrelationssignal Ro empfangen und auf der Grundlage der Korrelationssignale Ro beispielsweise den Abstand 16 ermitteln. Hierzu kann die Detektoreinheit in an sich bekannter Weise beispielsweise eine digitale Karte 22 erzeugen, in welcher auf der Grundlage der Korrelationssignale Ro detektierte Objekte, wie beispielsweise das Objekt 14, als Karteneinträge 14' eingetragen oder kartographiert werden. Hierdurch wird in der Detektoreinheit 20 mittels der digitalen Karte 22 die Umgebung des Kraftfahrzeugs 10 in Bezug auf darin befindliche Objekte, wie beispielsweise Hindernisse, kartographiert.

In dem gezeigten Beispiel sind die Ultraschallsensoren 18 an einer Front des Kraftfahrzeugs 10 angeordnet. Es können auch weitere Ultraschallsensoren 18' beispielsweise an einem Heck des Kraftfahrzeugs angeordnet sein und ebenfalls mit der Detektoreinheit 20 gekoppelt sein. Die Ultraschallsensoren 18, 18' können alle gleich ausgestaltet sein, weshalb im Folgenden lediglich ein einzelner Ultraschallsensor 18 beschrieben wird.

Jeder Ultraschallsensor 18 kann einen Sendezweig 24, einen Transducer oder Wandler 26 und einen Empfangszweig 28 aufweisen. Der Wandler 26 kann beispielsweise eine piezoelektrische Keramik oder einen piezoelektrischen Kunststoff aufweisen, mittels welchem in einer Sendephase des Ultraschallsensors 18 aus einem elektrischen Signal ein Ultraschal S erzeugt und in die Umgebung abgestrahlt wird und in einer Empfangsphase ein Ultraschall-Echo oder kurz Echo R des vom Objekt 14 reflektierten Ultraschalls S in ein elektrisches Signal gewandelt wird. Der Wandler 26 stellt also in dem Beispiel in der Sendephase eine Sendeeinheit im Sinne der Erfindung dar.

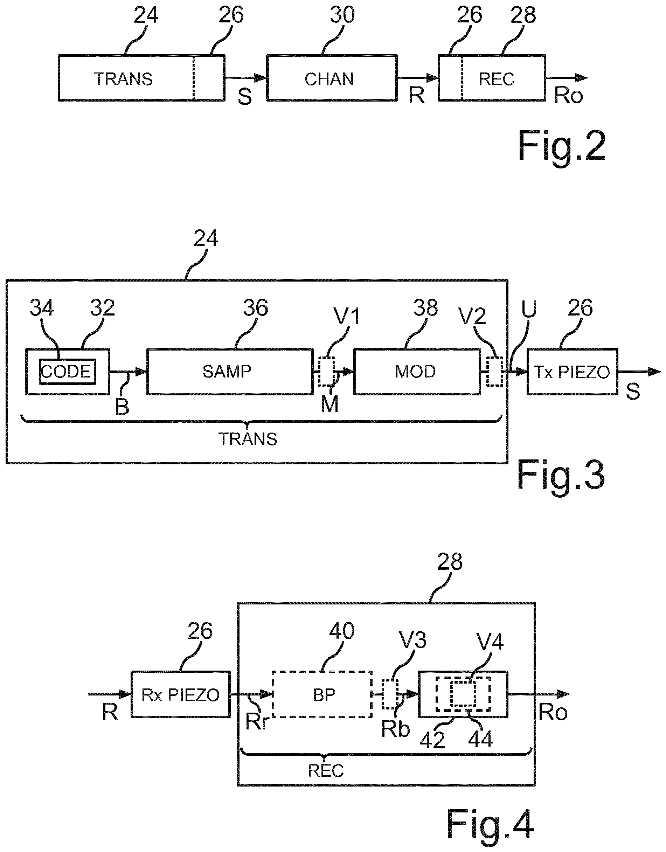

Für die folgende Erläuterung der Erzeugung des Ultraschallsignals S und der Rückwandlung des Echos R wird auf Fig. 2, Fig. 3 und Fig. 4 verwiesen.

In Fig. 2 sind der Übersichtlichkeit halber in einem Signalflussgraphen noch einmal die Komponenten dargestellt, die an einer einzelnen Ultraschallmessung mittels eines Ultraschallsensors 18 beteiligt sind. Der Sendezweig 24 (TRANS) bildet einen Transmitter zum Erzeugen eines elektrischen Anregungssignals für den Wandler 26, der daraufhin das Ultraschallsignal S erzeugt. Die Ausbreitung des Ultraschalls ist in Fig. 2 als Kanal 30 (CHAN) repräsentiert. Das am Wandler 26 eintreffende Echo R wird in ein elektrisches Signal gewandelt, welches wiederum vom Empfangszweig 28 (REC) verarbeitet wird, so dass das Korrelationssignal Ro erzeugt wird.

In Fig. 3 ist der Sendezweig 24 noch einmal genauer dargestellt. Aus einem Speicher 32 kann eine digitale Sendesequenz 34 (CODE) abgerufen werden. Die Sendesequenz 34 kann beispielsweise ein Barker-Code oder ein Codewort eines Gold-Codes sein. Eine Bitfolge B der Sendesequenz 34 kann mittels eines Samplers 36 (SAMP) auf eine Abtastfrequenz des Sendezweiges 24 hochgetastet werden (up-sampling). Das sich ergebende digitale Sendesignal M kann mittels eines Modulators 38 (MOD) mit einer Trägerfrequenz gemischt werden, und das sich so ergebende Sendesignal U kann mittels des Wandlers 26 in das Ultraschallsignal S gewandelt werden. Die Sendephase ist in Fig. 3 als Tx PIEZO repräsentiert, in welcher der Wandler 26 als Sendeeinheit fungiert.

In Fig. 4 ist in einem Signalflussidagramm veranschaulicht, wie in Abhängigkeit von dem Echo R das Korrelationssignal Ro erzeugt wird. Der Wandler 26 wandelt das Echo R in ein elektrisches Signal Rr um. Diese Betriebsphase des Wandlers ist in Fig. 4 als Rx PIEZO repräsentiert. Das elektrische Signal Rr kann mittels eines (nicht dargestellten) Analog-Digital-Wandlers digitalisiert und beispielsweise mit einem Bandpassfilter 40 (BP) gefiltert werden, um für die Detektion irrelevante Frequenzanteile außerhalb eines Frequenzbereichs der Trägerfrequenz zu unterdrücken. Das hieraus erzeugte gefilterte elektrische Signal Rb kann durch eine Signalverarbeitungseinheit 42 verarbeitet werden.

Die Signalverarbeitungseinheit 42 kann mittels eines Korrelationsfilters 44 das Empfangssignal Rb oder ein daraus gebildetes Basisbandsignal Rb' mit einem aus der Sendesequenz 34 erzeugten Korrelationskern korrelieren, sodass hierdurch das Korrelationssignal Ro entsteht.

Damit sich ein möglichst großes Korrelationsmaximum ergibt, falls in dem Empfangssignal Rb die Sendesequenz 34 im Empfangssignal Rb enthalten ist, wird bei der Ultraschallmessvorrichtung 12 auch ein Verzerrungseffekt berücksichtigt, welcher beim Erzeugen des Ultraschallsignals S und beim Empfangen und Wandeln des Echos R wirken und eine Signalverfälschung in dem Empfangssignal Rb verursacht haben kann, durch welche das Korrelationsmaximum verringert wird. Hierzu kann die Ultraschallmessvorrichtung 12 eine Verzerrungseinrichtung aufweisen, die Komponenten V1, V2, V3, V4 an unterschiedlichen Stellen in der Ultraschallmessvorrichtung aufweisen kann.

In Fig. 3 und Fig. 4 ist veranschaulicht, dass die Verzerrungseinrichtung Vorverzerrungsfilter als Komponenten V1, V2 im Sendezweig 24 und Filter als Komponenten V3, V4 im Empfangszweig 28 aufweisen kann. Es kann vorgesehen sein, dass jeweils nur eine der Komponenten V1, V2, V3, V4 oder auch eine Kombination mehrerer der Komponenten V1, V2, V3, V4 bereitgestellt sind. Die Vorverzerrungsfilter V1, V2 im Sendezweig 24 können dazu ausgelegt sein, dass im Sendezweig 24 die Modulation des Sendesignals eine Vorverzerrung enthält, bei der die Signalübertragungsstrecke berücksichtigt ist.

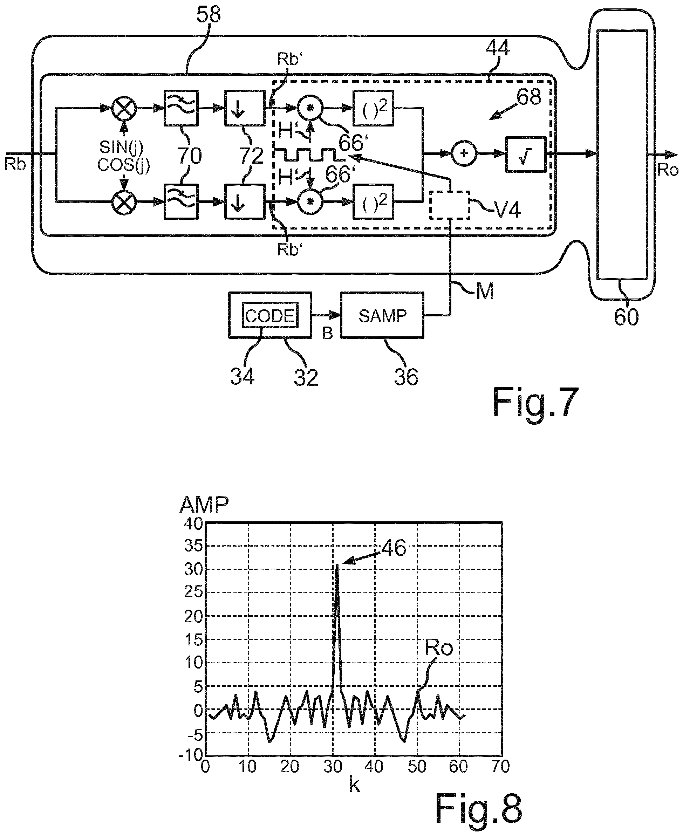

Zur Veranschaulichung der Wirkung der Verzerrungseinrichtung ist in Fig. 8 ein idealer Verlauf eines Korrelationssignals Ro bei verzerrungsfreiem Wandlersystem dargestellt. Gezeigt ist eine Abfolge von Abtastwerten oder Samples k des digitalen Korrelationssignals Ro und für jeden Abtastwert dessen Amplitude AMP. Eine optionale Absolutwertberechnung ist hier unterblieben. Bei einem idealen verzerrungsfreien Wandlersystem würde sich ein Korrelationsmaximum 46 mit der in Fig. 8 beispielhaft angegebenen Amplitude ergeben, falls die Sendesequenz 34 beziehungsweise das Sendesignal U unverzerrt im Empfangssignal Rb enthalten wäre und das Korrelationsfilter 44 als Korrelationskern ebenfalls die Sendesequenz 34 beziehungsweise das Sendesignal U zugrundelegen würde, wie es bei einem Optimalfilter oder Matched-Filter üblicherweise der Fall wäre.

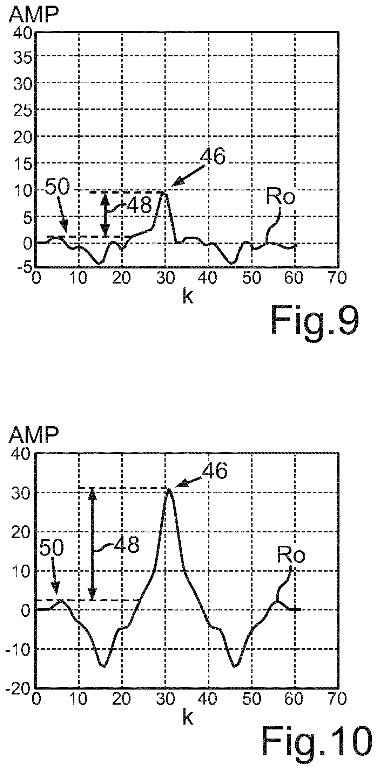

In Fig. 9 ist dargestellt, wie aufgrund der Übertragungscharakteristik des Wandlers 26 das Korrelationsmaximum 46 bei ansonsten gleichen Bedingungen auf einen kleineren Wert der Amplitude AMP sinkt. Ein Amplitudenverhältnis 48 zwischen dem Korrelationsmaximum 46 und dem Nebensignal 50, beispielsweise einem Rauschteppich, ist kleiner, das heißt das Signal-zu-Rauschverhältnis ist schlechter als im Idealfall, wie er in Fig. 8 gezeigt ist.

In Fig. 10 ist gezeigt, wie mittels einer oder mehrerer der Komponenten V1, V2, V3, V4 der Verzerrungseinrichtung im Korrelationssignal Ro wieder auf denselben Wert der Amplitude AMP wie im Idealfall von Fig. 8 angehoben werden kann, sodass sich das Amplitudenverhältnis 48, also das Signal-zu-Rauschverhältnis verbessert. In dem gezeigten Beispiel hat sich das Korrelationsmaximum 46 in Fig. 10 im Verhältnis zum Korrelationmaximum 46 in Fig. 9 um den Faktor 3 verbessert. In Fig. 10 weist dabei das Nebensignal 50 einen maximalen Amplitudenwert auf, der nur unwesentlich von dem maximalen Amplitudenwert des Nebensignals in Fig. 8 abweicht. Mit anderen Worten entspricht das Amplitudenverhältnis 48 in Fig. 10 im Wesentlichen demjenigen des Idealfalls von Fig. 8.

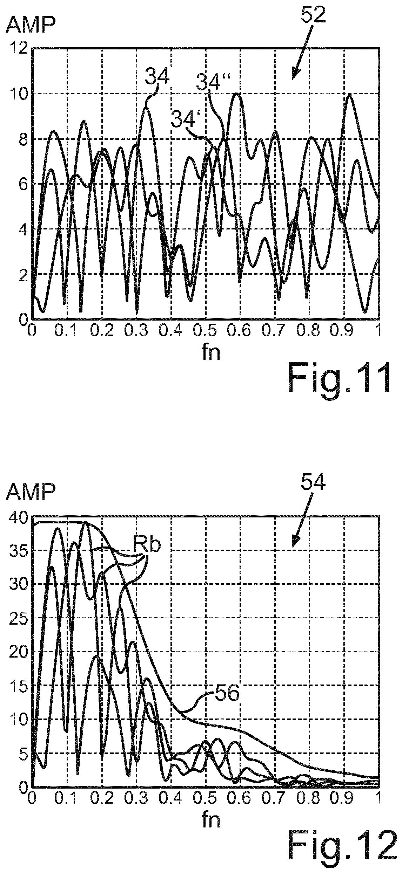

Der Einfluss der Übertragungscharakteristik des Wandlers 26 ist in Fig. 11 und 12 noch einmal veranschaulicht. Hierzu sind in Fig. 11 und Fig. 12 über einer normierten Frequenz fn Spektren 52 der Sendesequenz 34 und weiterer möglicher Sendesequenzen 34', 34" gezeigt. Die Sendesequenzen 34, 34', 34" können beispielsweise Gold-Codeworte sein, die zueinander orthogonal sind. Den Sendesequenzen 34, 34', 34" ist gemeinsam, dass sie ein annähernd weißes Spektrum aufweisen.

In Fig. 12 ist gezeigt, welche Spektren 54 des Empfangssignals Rb sich für die unterschiedlichen Sendesequenzen 34, 34', 34" ergeben. Durch eine Übertragungscharakteristik 56 des Wandlers 26 weist jedes Empfangssignal Rb eine Tiefpasscharakteristik auf. Korreliert man nun das Empfangssignal Rb mit der korrespondierenden Sendesequenz 34, 34', 34", so ergibt sich hierdurch keine Optimalfilterbedingung, also kein Matched-Filter. Daher verschlechtert sich das Amplitudenverhältnis 48 in der in Fig. 9 gezeigten Weise.

Um die Übertragungscharakteristik 56 zu kompensieren, kann durch die Vorverzerrungsfilter V1 oder V2 im Sendezweig 24 eine Verzerrung eingeführt werden, die beispielsweise dadurch gebildet werden kann, dass die Filtercharakteristik des Vorverzerrungsfilters V1, V2 der inversen Übertragungscharakteristik 26 entspricht. Im Frequenzbereich bedeutet dies, dass der reziproke Wert der Übertragungscharakteristik 26 als Filtercharakteristik verwendet wird.

Im Empfangszweig 28 kann ebenfalls mit dem Filter V3 durch Verwenden einer Filtercharakteristik, die der inversen Übertragungscharakteristik 56 entspricht, die Übertragungscharakteristik 56 kompensiert werden.

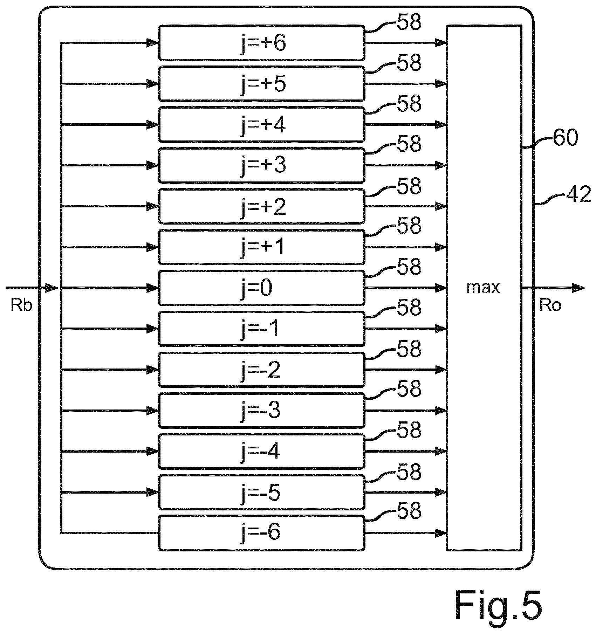

Eine andere Möglichkeit ist durch die Komponente V4 gegeben. Für die Erklärung der Funktionsweise der Komponente V4 wird im Folgenden auf Fig. 5, Fig. 6 und Fig. 7 verwiesen.

In Fig. 5 ist gezeigt, wie die Signalverarbeitungseinrichtung 42 eine Mehrzahl von Filterbankelementen 58 aufweisen kann, wobei jedes Filterbankelement 58 für eine vorbestimmte Dopplerverschiebung j zum Kompensieren einer Relativgeschwindigkeit des Objekts 14 zum Ultraschallsensor 18 vorgesehen sein kann. Durch einen Vergleicher 60 wird dann diejenige Korrelationsausgabe ausgewählt, bei welcher das Korrelationsmaximum 46 maximal ist. Das zugehörige Filterbankelement 58 gibt dann der Dopplerversatz oder die Dopplerverschiebung j an. Jedes Filterbankelement 58 kann in gleicher Weise ausgestaltet sein.

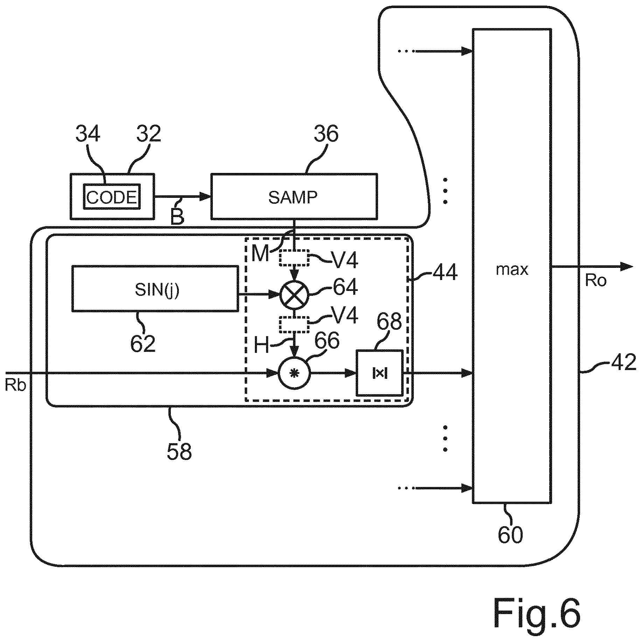

In Fig. 6 ist eine mögliche Ausgestaltung eines Filterbankelements 58 gezeigt. Das Filterbankelement 58 weist hier jeweils eine Ausführung des Korrelationsfilters 44 auf, welches auf der Grundlage der abgetasteten Sendesequenz M und einem Modulationssignal SIN eines digitalen Oszillators 62 durch einen Mischer 64 einen Korrelationskern H für einen Multiplikator 66 erzeugt, welcher den Korrelationskern H mit dem Eingangssignal Rb im Frequenzbereich der Trägerfrequenz korreliert. Eine Absolutwertberechnung 68 (|x|) erzeugt dann das vorläufige Korrelationssignal für den Vergleicher 60.

Um nun die Übertragungscharakteristik 56 zu kompensieren, kann die Komponente V4 vor dem Mischer 64 im Basisband oder zwischen dem Mischer 64 und dem Korrelator 66 im Frequenzbereich der Trägerfrequenz SIN geschaltet sein. Eine Filtercharakteristik der Komponente V4 entspricht dabei bevorzugt der Übertragungscharakteristik 56. Hierdurch entsprechen sich dann die im Empfangssignal Rb enthaltene Sendesequenz 34 und die im Korrelationskern H enthaltene Sendesequenz 34.

In Fig. 7 ist eine alternative Ausführungsform eines Filterbankelements 58 dargestellt. Das Empfangssignal Rb wird durch für die jeweilige Dopplerverschiebung j gebildete Mischerfrequenzen SIN(j), COS(j) sowie durch Bandpässe 70 und eine Abtastung 72 in das Basisband heruntergemischt. Korrelatoren 66' korrelieren das hierdurch gebildete Eingangssignal Rb' mit dem Korrelationskern H' und ein aus einem Quadrierer, einem Summierer und einer Wurzelberechnung gebildeter Absolutwertberechner 68' erzeugt das vorläufige Korrelationssignal für den Vergleicher 60.

Der Korrelationskern H' wird hier im Basisband mittels eines Filters V4 der Verzerrungseinrichtung gebildet, wobei eine Filtercharakteristik des Filters V4 ebenfalls auf der Grundlage der Übertragungscharakteristik 56 gebildet ist. Die im Empfangssignal Rb' enthaltene Sendesequenz 34, die durch die Übertragungscharakteristik 56 des Wandlers 26 in der in Fig. 12 gezeigten Weise verzerrt ist, ist dann auch in dem Korrelationskern H' mit derselben Übertragungscharakteristik 56 verzerrt. Hierdurch ergibt sich dann bei der Korrelation durch den Korrelator 66' das Korrelationsergebnis, wie es in Fig. 10 gezeigt ist.

Die Übertragungscharakteristik 56 kann im Voraus beispielsweise durch Messung vor der Bereitstellung der Ultraschallmessvorrichtung 12 im Kraftfahrzeug 10 ermittelt und durch entsprechende Parameter in der Ultraschallmessvorrichtung 12 gespeichert sein. Die Übertragungscharakteristik 56 kann auch während des Betriebs geschätzt werden. Dann ist die Vorverzerrung durch die Filter V1, V2, V3 oder die Verzerrung durch das Filter V4 adaptiv an die sich ändernde Signalübertragungsstrecke angepasst. Die Verzerrung findet insbesondere Anwendung bei den modulierten Signalen.

Die beschriebene Ultraschallmessvorrichtung 12 beruht auf den folgenden erfindungsgemäßen Erkenntnissen. Ausgegangen wird von Messsignalen, die eine gewünschte Eigenschaft, beispielsweise bezüglich ihrer Korrelationsfunktion, besitzen. Sucht man einen Satz von Signalen 34, 34', 34", die untereinander unkorreliert sind, also orthogonal zueinander sind, und jeweils selbst ein günstiges Verhältnis 48 von Hauptmaximum 46 zu Nebenmaxima der Korrelationsfunktion besitzen, wären Gold-Codes eine geeignete Signalgruppe. Werden diese Signale in einem vorgegebenen Messsystem gefiltert, so verlieren sie gegebenenfalls ihre günstigen Korrelationseigenschaften. Dies führt dann dazu, dass das Signal-zu-Rauschverhältnis verschlechtert wird. Um hier ein verbessertes Signal-zu-Rauschverhältnis zu erzielen, ohne die guten korrelativen Eigenschaften zu verlieren, müssten die Signale an das technische System in einem transparenten Verfahren angepasst werden, durch das sie gefiltert und damit linear verzerrt werden. Dieses Vorgehen gilt aber auch bei nichtlinearen Verzerrungen, zum Beispiel bei übersteuerten Verstärkern. Hierzu ist die Verzerrungseinrichtung bereitgestellt. Diese Anpassung kann man als Vorverzerrung beschreiben, die in der Weise erfolgt, dass das Signal-zu-Rauschverhältnis maximiert wird. Aus der Signaltheorie weiß man, dass das Signal-zu-Rauschverhältnis maximal wird, wenn man ein Signal mit sich selbst korreliert, was dann durch ein sogenanntes Matched-Filter realisiert wird. Der Vorteil dieses Ansatzes liegt darin, dass man das maximale Signal-zu-Rauschverhältnis für jedes beliebige, durch eine technische Komponente verzerrte Signal erreichen kann. In diesem Ansatz wird das Matched-Filter in der gleichen Weise verzerrt, wie das Messsignal auf seinem Weg durch das technische System, insbesondere durch den Wandler 26. Um diese Verzerrung vorzunehmen, muss lediglich die verzerrende Wirkung des vorgelagerten technischen Systems, also die Übertragungscharakteristik 56, beziehungsweise seiner Komponenten bekannt sein. Diese Verzerrungen können bei einem zeitlich sich nicht verändernden technischen System einmal gemessen und dann im Entwurfs- oder Designprozess des Matched-Filters berücksichtigt werden, indem beispielsweise entsprechende Korrelationskerne H, H' gespeichert werden. Sollten sich die maßgeblichen Komponenten des Messsystems über der Zeit ändern, so kann diese Veränderung durch Beobachten des verzerrten Signals festgestellt werden, da das unverzerrte Messsignal U bekannt ist und seine verzerrte Version Rb beim Start des Messsystems ermittelt werden kann. Ändert sich die Verzerrung im Laufe des Betriebs des Messsystems, kann dies vor dem Matched-Filter ermittelt werden. Durch Entfaltung des durch Systemkomponenten verzerrten Messsignals mit dem bekannten, unverzerrten Messignal kann die geänderte verzerrende Wirkung des Messsignals ermittelt und bei der Anpassung des Matched-Filters berücksichtigt werden.

So lässt sich ein Ultraschallmesssystem bereitstellen, das zur Entfernungsmessung dient, wobei nun Messsignale verwendet werden können, die ein möglichst scharfes Maximum ihrer Korrelationsfunktion besitzen. Bisher müssen die Messsignale dagegen auch auf die verzerrenden Eigenschaften des Wandlers 26 Rücksicht nehmen. Das Optimum liefern insbesondere Messsignale mit Barker-Codierung. Es gibt aber nur wenige Barker-Codes, sodass die Codelänge sehr beschränkt ist. Ferner gibt es keine Sätze von Signalen mit Barker-Codierung, die untereinander unkorreliert sind. Deshalb verwendet man im Stand der Technik spezielle Sätze von Messsignalen, die zum einen zu einem günstigen Signal-zu-Rauschverhältnis führen, andererseits auf die geringe Bandbreite der Ultraschallsensoren Rücksicht nehmen. Diese Signale sind damit abhängig von den Eigenschaften der Ultraschallsensoren und müssen mit hohem Aufwand verändert werden, wenn sich die Bandbreite des Ultraschallsensors beispielsweise während des Betriebs durch Temperatur ändert. Ferner ist es sehr aufwendig, Sätze von untereinander orthogonalen Signalen unter diesen Randbedingungen zu generieren.

Das hier beschriebene Ultraschallmesssystem kann dagegen diesen hohen Aufwand vermeiden, indem die Übertragungscharakteristik 56 kompensiert wird. Deshalb kann ein herkömmlicher Satz von orthogonalen Signalen verwendet werden, wobei es auch ausreichend ist, quasi-orthogonale Signale, wie beispielsweise Gold-Codes 34, 34', 34", zu verwenden. Um die Eigenschaften des Ultraschallmesssystems 12 zu berücksichtigen, müssen diese Signale nur mit mindestens einer Komponente V1, V2, V3, V4 der Verzerrungseinrichtung verzerrt werden, um dann als Referenz im Matched-Filter beziehungsweise Korrelator verwendet zu werden.

Insgesamt zeigt das Beispiel, wie durch die Erfindung Messsignale an vorgegebene Übertragungskomponenten zur Systemoptimierung angepasst werden können.

## Patentansprüche

1. Verfahren zum Betreiben einer Ultraschallmessvorrichtung (12) zum Detektieren eines Objekts (14) und insbesondere zur Messung des Abstands zum Objekt (14), wobei aus einer digitalen Sendesequenz (34) durch einen Sendezweig (24) ein Sendesignal (U) und aus dem Sendesignal (U) durch eine Sendeeinheit (26) ein Ultraschallsignal (S), in Abhängigkeit von einem Objekt-Echo (R) des Ultraschallsignals (S) durch eine Empfangseinheit ein Empfangssignal (Rb, Rb') und aus dem Empfangssignal (Rb, Rb') durch ein Korrelationsfilter (44) ein Korrelationssignal (Ro) durch Korrelieren des Empfangssignals (Rb, Rb') mit einem Korrelationskern (H, H') erzeugt wird und das Korrelationssignal (Ro) einer Detektoreinheit (20) bereitgestellt wird,
**dadurch gekennzeichnet, dass**
durch eine Verzerrungseinrichtung (V4) der Korrelationskern (H, H') mit einer Signalcharakteristik bereitgestellt wird, die eine Übertragungscharakteristik (56) der Sendeeinheit (26) und/oder der Empfangseinheit (26) in dem Korrelationssignal (Ro) zumindest teilweise kompensiert.

2. Verfahren nach Anspruch 1, **dadurch gekennzeichnet, dass** in dem Sendezweig (24) ein Vorverzerrungsfilter (V1, V2) mit einer Filtercharakteristik bereitgestellt wird, durch welche im Empfangssignal (Rb, Rb') die Übertragungscharakteristik (56) zumindest teilweise kompensiert wird.

3. Verfahren nach einem der vorhergehenden Ansprüche, **dadurch gekennzeichnet, dass** der Korrelationskern (H, H') aus der Sendesequenz (34) auf der Grundlage eines Filters (V4) gebildet wird, das die Übertragungscharakteristik (56) zumindest teilweise nachbildet.

4. Verfahren nach einem der vorhergehenden Ansprüche, **dadurch gekennzeichnet, dass** der Korrelationskern (H, H') aus einer dauerhaft in der Ultraschallmessvorrichtung (12) gespeicherten Korrelationssequenz gebildet wird, wobei die Korrelationssequenz von der Sendesequenz (34) verschieden ist und ein Unterschied zwischen der Korrelationssequenz und der Sendesequenz (34) der Übertragungscharakteristik (56) entspricht.

5. Verfahren nach einem der vorhergehenden Ansprüche, **dadurch gekennzeichnet, dass** durch die Verzerrungseinrichtung (V1, V2, V3, V4) eine Schätzung der Übertragungscharakteristik (56) im Betrieb der Ultraschallmessvorrichtung (12) ermittelt wird.

6. Verfahren nach Anspruch 5, **dadurch gekennzeichnet, dass** die Schätzung durch Erfassen eines Werts eines Betriebsparameters der Ultraschallmessvorrichtung (12) und Auswählen und/oder Berechnen der Schätzung in Abhängigkeit von dem Wert ermittelt wird.

7. Verfahren nach Anspruch 5 oder 6, **dadurch gekennzeichnet, dass** die Schätzung für eine zukünftige Korrelation aus dem aktuellen Sendesignal (U) und dem zugehörigen Empfangssignal (Rb) berechnet wird.

8. Verfahren nach einem der vorhergehenden Ansprüche, **dadurch gekennzeichnet, dass** die Sendesequenz (34) eine Bitfolge von wenigstens drei aufeinanderfolgenden, alternierenden Bits umfasst und beim Aussenden jedes Bits eine jeweilige Chipdauer des Sendezweigs (24) weniger als 100 Mikrosekunden, insbesondere weniger als 70 Mikrosekunden, beträgt.

9. Verfahren nach einem der vorhergehenden Ansprüche, **dadurch gekennzeichnet, dass** die Sendesequenz (34) einen Barker-Code oder ein Codewort aus einem Gold-Code umfasst.

10. Verfahren nach einem der vorhergehenden Ansprüche, **dadurch gekennzeichnet, dass** die Sendeeinheit (26) und eine weitere Sendeeinheit (26) in einem gemeinsamen Zeitintervall ein jeweiliges Ultraschallsignal (S) aus unterschiedlichen Sendesignalen (U) erzeugen und das Empfangssignal (Rb) mit dem Korrelationskern (H, H') und einem weiteren Korrelationskern korreliert wird.

11. Verfahren nach einem der vorhergehenden Ansprüche, **dadurch gekennzeichnet, dass** das Sendesignal (U) aus der Sendesequenz (34) durch Modulieren einer Trägerfrequenz durch einen Modulator (38) erzeugt wird und das Korrelationsfilter (44) die Korrelation in einem Frequenzbereich der Trägerfrequenz durchführt.

12. Ultraschallmessvorrichtung (12) mit einem Speicher (32), der eine digitale Sendesequenz (34) speichert, einem Sendezweig (24) zum Erzeugen eines Sendesignals (U) aus der Sendesequenz (34), einer Sendeeinheit (26) zum Umwandeln des Sendesignals (U) in ein Ultraschallsignal (S), einer Empfangseinheit (26, 28) zum Erzeugen eines Empfangssignals (Rb, Rb') in Abhängigkeit von einem Objekt-Echo (R), einem Korrelationsfilter (44) zum Korrelieren des Empfangssignals (Rb, Rb') mit einem Korrelationskern (H, H') und einer Detektoreinheit (20) zum Detektieren des Objekts (14),
**dadurch gekennzeichnet, dass**
eine Verzerrungseinrichtung (V1, V2, V3, V4) bereitgestellt ist, die dazu ausgelegt ist, bei dem Korrelationskern (H, H') jeweils eine Signalcharakteristik einzustellen, die eine Übertragungscharakteristik (56) der Sendeeinheit (26) und/oder der Empfangseinheit (26) in einem Korrelationssignal (Ro) des Korrelationsfilters (44) zumindest teilweise kompensiert.

13. Ultraschallmessvorrichtung (12) nach Anspruch 12, **dadurch gekennzeichnet, dass** mindestens eine zusätzliche Sendeeinheit bereitgestellt ist und für alle Sendeeinheiten unterschiedliche Sendesequenzen in dem Speicher gespeichert sind, wobei die Sendesequenzen zueinander orthogonal sind, und die Ultraschallmessvorrichtung (12) dazu ausgelegt ist, mit den Sendeeinheiten gleichzeitig ein jeweiliges Ultraschallsignal (S) auf Grundlage der jeweiligen Sendesequenz zu erzeugen.

14. Ultraschallmessvorrichtung (12) nach Anspruch 13, wobei die Detektoreinheit (20) dazu ausgelegt ist, beim Detektieren des Objekts (14) einen Objektabstand (16) von weniger als 40 cm, insbesondere weniger als 35 cm, von einer der Sendeeinheiten (26) und/oder der Empfangseinheit (26) zu überprüfen.

15. Fahrzeug (10) mit einer Ultraschallmessvorrichtung (12) nach einem der Ansprüche 12 bis 14.

## Claims

1. Method for operating an ultrasonic measurement apparatus (12) for detecting an object (14) and in particular for measuring the distance to the object (14), wherein a transmitting signal (U) is generated from a digital transmitting sequence (34) by a transmitting branch (24) and an ultrasonic signal (S) is generated from the transmitting signal (U) by a transmitting unit (26), a receiving signal (Rb, Rb') is generated by a receiving unit depending on an object echo (R) of the ultrasonic signal (S), and a correlation signal (Ro) is generated from the receiving signal (Rb, Rb') by a correlation filter (44) by correlating the receiving signal (Rb, Rb') with a correlation core (H, H'), and the correlation signal (Ro) is provided to a detector unit (20),
**characterized in that**
the correlation core (H, H') is provided, by a distortion device (V4), with a signal characteristic, which at least partially compensates for a transfer characteristic (56) of the transmitting unit (26) and/or the receiving unit (26) in the correlation signal (Ro).

2. Method according to claim 1, **characterized in that** a predistortion filter (V1, V2) with a filter characteristic is provided in the transmitting branch (24), by which the transfer characteristic (56) is at least partially compensated for in the receiving signal (Rb, Rb').

3. Method according to any one of the preceding claims, **characterized in that** the correlation core (H, H') is formed from the transmitting sequence (34) based on a filter (V4), which at least partially emulates the transfer characteristic (56).

4. Method according to any one of the preceding claims, **characterized in that** the correlation core (H, H') is formed from a correlation sequence permanently stored in the ultrasonic measurement apparatus (12), wherein the correlation sequence is different from the transmitting sequence (34) and a difference between the correlation sequence and the transmitting sequence (34) corresponds to the transfer characteristic (56).

5. Method according to any one of the preceding claims, **characterized in that** an estimation of the transfer characteristic (56) is ascertained by the distortion device (V1, V2, V3, V4) in the operation of the ultrasonic measurement apparatus (12).

6. Method according to claim 5, **characterized in that** the estimation is ascertained by capturing a value of an operating parameter of the ultrasonic measurement apparatus (12) and selecting and/or calculating the estimation depending on the value.

7. Method according to claim 5 or 6, **characterized in that** the estimation is calculated from the current transmitting signal (U) and the associated receiving signal (Rb) for a future correlation.

8. Method according to any one of the preceding claims, **characterized in that** the transmitting sequence (34) includes a bit string of at least three consecutive, alternating bits and a respective chip duration of the transmitting branch (24) is less than 100 microseconds, in particular less than 70 microseconds, upon emitting each bit.

9. Method according to any one of the preceding claims, **characterized in that** the transmitting sequence (34) includes a Barker code or a code word from a Gold code.

10. Method according to any one of the preceding claims, **characterized in that** the transmitting unit (26) and a further transmitting unit (26) generate a respective ultrasonic signal (S) from different transmitting signals (U) in a common time interval and the receiving signal (Rb) is correlated with the correlation core (H, H') and a further correlation core.

11. Method according to any one of the preceding claims, **characterized in that** the transmitting signal (U) is generated from the transmitting sequence (34) by modulating a carrier frequency by a modulator (38) and the correlation filter (44) performs the correlation in a frequency range of the carrier frequency.

12. Ultrasonic measurement apparatus (12) with a memory (32) storing a digital transmitting sequence (34), a transmitting branch (24) for generating a transmitting signal (U) from the transmitting sequence (34), a transmitting unit (26) for converting the transmitting signal (U) into an ultrasonic signal (S), a receiving unit (26, 28) for generating a receiving signal (Rb, Rb') depending on an object echo (R), a correlation filter (44) for correlating the receiving signal (Rb, Rb') with a correlation core (H, H') and a detector unit (20) for detecting the object (14),
**characterized in that**
a distortion device (V1, V2, V3, V3) is provided, which is adapted to respectively adjust a signal characteristic of the correlation core (H, H'), which at least partially compensates for a transfer characteristic (56) of the transmitting unit (26) and/or the receiving unit (26) in a correlation signal (Ro) of the correlation filter (44).

13. Ultrasonic measurement apparatus (12) according to claim 12, **characterized in that** at least one additional transmitting unit is provided and different transmitting sequences are stored in the memory for all of the transmitting units, wherein the transmitting sequences are orthogonal to each other, and the ultrasonic measurement apparatus (12) is adapted to simultaneously generate a respective ultrasonic signal (S) by the transmitting units based on the respective transmitting sequence.

14. Ultrasonic measurement apparatus (12) according to claim 13, wherein the detector unit (20) is adapted to check an object distance (16) of less than 40 cm, in particular less than 35 cm, of one of the transmitting units (26) and/or the receiving unit (26) upon detecting the object (14).

15. Vehicle (10) with an ultrasonic measurement apparatus (12) according to any one of claims 12 to 14.

## Revendications

1. Procédé d'exploitation d'un appareil de mesurage par ultrasons (12), destiné à détecter un objet (14) et en particulier à mesurer la distance par rapport à l'objet (14), un signal d'émission (U) étant produit à partir d'une séquence d'émission numérique (34) par le biais d'une branche d'émission (24) et un signal ultrasonore (S) à partir du signal d'émission (U) par le biais d'une unité d'émission (26), un signal de réception (Rb, Rb'), en fonction de l'écho d'un objet (R) du signal ultrasonore (S) par le biais d'une unité de réception et un signal de corrélation (Ro) à partir du signal de réception (Rb, Rb') par le biais d'un filtre de corrélation (44), par corrélation du signal de réception (Rb, Rb') avec un noyau de corrélation (H, H') et le signal de corrélation (Ro) étant mis à disposition d'une unité de détection (20),
**caractérisé en ce que**
le noyau de corrélation (H, H') est mis à disposition, par le biais d'un dispositif de distorsion (V4), avec une caractéristique de signal qui compense au moins partiellement une caractéristique de transmission (56) de l'unité d'émission (26) et / ou de l'unité de réception (26) dans le signal de corrélation (Ro).

2. Procédé selon la revendication1,
**caractérisé en ce que**,
dans la branche d'émission (24), un filtre de prédistorsion (V1, V2) est mis à disposition avec une caractéristique de filtre, par le biais de laquelle la caractéristique de transmission (56) est compensée au moins partiellement dans le signal de réception (Rb, Rb').

3. Procédé selon l'une des revendications précédentes,
**caractérisé en ce que**
le noyau de corrélation (H, H') est formé à partir de la séquence d'émission (34), sur la base d'un filtre (V4), que la caractéristique de transmission (56) reproduit au moins partiellement.

4. Procédé selon l'une des revendications précédentes,
**caractérisé en ce que**
le noyau de corrélation (H, H') est formé à partir d'une séquence de corrélation, sauvegardée de manière permanente dans l'appareil de mesurage par ultrasons (12), la séquence de corrélation étant différente de la séquence d'émission (34) et une différente entre la séquence de corrélation et la séquence d'émission (34) correspondant à la caractéristique de transmission (56).

5. Procédé selon l'une des revendications précédentes,
**caractérisé en ce**
**qu'**une estimation de la caractéristique de transmission (56) est déterminée, lorsque l'appareil de mesurage par ultrasons (12) est en service, par le biais du dispositif de distorsion (V1, V2, V3, V4).

6. Procédé selon la revendication 5,
**caractérisé en ce que**
l'estimation est déterminée par le biais de la saisie d'une valeur d'un paramètre d'exploitation de l'appareil de mesurage par ultrasons (12) et sélection et / ou calcul de l'estimation en fonction de la valeur.

7. Procédé selon la revendication 5 ou 6,
**caractérisé en ce que**
l'estimation est calculée pour une corrélation future à partir du signal d'émission (U) actuel et du signal de réception (Rb) associé.

8. Procédé selon l'une des revendications précédentes,
**caractérisé en ce que**
la séquence d'émission (34) comprend une suite de bits d'au moins trois bits successifs, alternatifs et qu'une durée de modulation respective de la branche d'émission (24) est inférieure à 100 microsecondes, en particulier inférieure à 70 microsecondes, lors de l'émission de chaque bit.

9. Procédé selon l'une des revendications précédentes,
**caractérisé en ce que**
la séquence d'émission (34) comprend un code de Barker ou un mot de code à partir d'un code d'or.

10. Procédé selon l'une des revendications précédentes,
**caractérisé en ce que**
l'unité d'émission (26) et une autre unité d'émission (26) produisent dans un intervalle de temps commun un signal ultrasonore (S) respectif à partir de différents signaux d'émission (U) et que le signal de réception (Rb) est corrélé avec le noyau de corrélation (H, H') et d'un autre noyau de corrélation.

11. Procédé selon l'une des revendications précédentes,
**caractérisé en ce que**
le signal d'émission (U) est produit à partir de la séquence d'émission (34), par modulation d'une fréquence porteuse par le biais d'un modulateur (38) et que le filtre de corrélation (44) exécute la corrélation dans une gamme de fréquences de la fréquence porteuse.

12. Appareil de mesurage par ultrasons (12) avec une mémoire (32), qui sauvegarde une séquence d'émission numérique (34) une branche d'émission (24), destinée à produire un signal d'émission (U) à partir de la séquence d'émission (34), une unité d'émission (26), destinée à convertir le signal d'émission (U) en un signal ultrasonore (S), une unité de réception (26, 28), destinée à produire un signal de réception (Rb, Rb') en fonction de l'écho d'un objet (R), un filtre de corrélation (44), destiné à corréler le signal de réception (Rb, Rb') avec un noyau de corrélation (H, H') et une unité formant détecteur (20), destinée à détecter l'objet (14),
**caractérisé en ce**
**qu'**un dispositif de distorsion (V1, V2, V3, V4) est mis à disposition, qui est conçu pour régler respectivement, concernant le noyau de corrélation (H, H'), une caractéristique de signal, qui compense au moins partiellement une caractéristique de transmission (56) de l'unité d'émission (26) et / ou de l'unité de réception (26) dans un signal de corrélation (Ro) du filtre de corrélation (44).

13. Appareil de mesurage par ultrasons (12) selon la revendication 12,
**caractérisé en ce**
**qu'**au moins unité d'émission supplémentaire est mise à disposition et que des séquences d'émission différentes sont sauvegardées en mémoire pour toutes les unités d'émission, les séquences d'émission étant orthogonales les unes par rapport aux autres et l'appareil de mesurage par ultrasons (12) étant conçu pour produire, en même temps que les unités d'émission, un signal ultrasonore (S) respectif sur la base de la séquence d'émission respective.

14. Appareil de mesurage par ultrasons (12) selon la revendication 13, l'unité formant détecteur (20) étant conçue pour examiner, lors de la détection de l'objet (14), une distance de l'objet (16) inférieure à 40 cm, en particulier inférieure à 35 cm, par rapport à l'une des unités d'émission (26) et / ou de l'unité de réception (26).

15. Véhicule (10) avec l'appareil de mesurage par ultrasons (12) selon l'une des revendications 12 à 14.
